# EUROPEAN PATENT APPLICATION

(11) **EP 2 804 185 A2**
(43) Date of publication of application: **19.11.2014**
(21) Application number: 13735849.5
(22) Date of filing: 11.01.2013
(51) Int. Cl.: H01B 3/38, H01B 3/30, C08G 73/10, C08L 79/08

(54) **INSULATION MATERIAL FOR ELECTRONIC DEVICE**

(30) Priority: 13.01.2012 KR 20120004388
(71) Applicant: LG Chem, Ltd., Seoul 150-721 (KR)
(72) Inventor: KIM, Sang-Woo, Daejeon 305-738 (KR); IM, Mi-Ra, Daejeon 305-738 (KR); KIM, Kyung-Jun, Daejeon 305-738 (KR); PARK, Chan-Hyo, Daejeon 305-738 (KR); NAM, Kyou-Hyun, Daejeon 305-738 (KR)
(74) Representative: Goddar, Heinz J.
(86) International application number: PCT/KR2013/000247
(87) International publication number: WO 2013/105813

(57) **Abstract**

The present invention relates to insulating material for an electronic device that may inhibit damage to an electronic device due to a high temperature curing process, and simultaneously exhibit excellent properties and reliability. The insulating material for an electronic device comprises soluble polyimide resin comprising a specific repeat unit, exhibits imidization degree of 70% or more after curing at a temperature of 250°C, and comprises a low boiling point solvent having boiling point of 130 to 180°C as a residual solvent.

## Description

### Technical Field

The present invention relates to insulating material for an electronic device that may inhibit damage to an electronic device due to a high temperature curing process, and simultaneously exhibit excellent properties and reliability.

### Background Art

Recently, in the field of electronic devices such as semiconductor, OLED devices, or liquid display devices, and the like, with the rapid spread of high integration, high density, high reliability, and high speed of devices, studies on using advantages of organic material in that it may be easily processed and made with high purity are being actively progressed.

Particularly, since polyimide resin has high heat resistance, excellent mechanical strength, excellent electrical properties such as low dielectric constant and high insulation, and good flattening property of a coating surface, has very low impurity contents, and may be easily formed as a micro-shape, the application as insulating material is being expanded to various electronic devices.

However, polyimide resin itself exhibits low solubility in a common organic solvent, and it may exhibit partial solubility only in an organic solvent having high boiling point such as N-methyl-2-pyrrolidone (NMP; boiling point: about 202°C) or gammabutyrolactone(GBL; boiling point: about 204°C), and the like. Thus, there is process difficulty in the formation of an insulation layer with a composition comprising the polyimide resin itself and an organic solvent, because coatability is lowered due to low solubility of polyimide resin itself, and furthermore, since a high temperature process is required to remove solvents, it may be difficult to apply the insulating layer for an electronic device that includes organic substance and thus is vulnerable to heat, such as OLED devices, and the like.

For this reason, in general, an insulating layer including polyimide resin is formed by polymerizing diamine and dianhydrie in a polar organic solvent to obtain a polyimide precursor solution, for example, a polyamic acid ester solution, coating the same on a substrate, and then, imidating and curing polyimide precursor.

However, in this case, due to low solubility of imidated polyimide resin, a high boiling point solvent such as N-methyl-2-pyrrolidone(NMP), and the like should be used as the organic solvent.

Thus, in the process of forming an insulating layer, a high temperature curing process should be conducted, for example, at about 300□ or more, for imidization of the polyimide precursor and removal of a high boiling point solvent or catalyst. Due to the high temperature curing process, properties of an electronic device including the insulating layer may be changed or the electronic device may be damaged, and particularly, it may be difficult to apply the insulating layer for an electronic device that is vulnerable to heat, such as OLED device, and the like. Moreover, even if the high temperature curing is progressed, it is difficult that the polyimide precursor solution may exhibit high imidization degree, and conversion rate into polyimide resin may not be high, thus deteriorating properties of an insulating layer, and the like.

To overcome these problems, a method of chemical imidization in a liquid phase using a specific catalyst has been suggested. However, this method still requires a high temperature polymerization or curing process, and a high temperature curing process should be progressed to form an insulating layer, and the like for removal of a high boiling point solvent or catalyst, and the like.

### Summary of the Invention

The present invention provides insulating material for an electronic device that does not require a high temperature curing process in the formation process, and thus may inhibit damage to the electronic device, and simultaneously exhibit excellent properties.

The present invention provides insulating material for an electronic device comprising soluble polyimide resin comprising a repeat unit of the following Chemical Formula 1, which exhibits imidization degree of 70% or more after curing at a temperature of 250°C or less, and comprises a low boiling point solvent having boiling point of 130 to 180°C as a residual solvent:

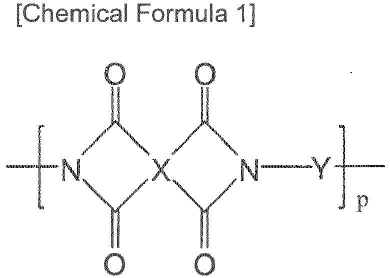

In the Chemical Formula 1, p is an integer of from 2 to 500, X is a tetravalent organic group, and Y is a divalent organic group having at least one hydroxy group or carboxy group.

The imidization degree may be measured after forming a resin composition comprising soluble polyimide resin and a low boiling point solvent on a substrate, prebaking at 110 to 130°C, and hardbaking at 220 to 250°C.

The imidization degree may be represented by relative integrated intensity ratio of CN band after hardbaking at 220 to 250°C, when the integrated intensity of CN band appearing at 1350 to 1400 cm⁻¹ or 1550 to 1650 cm⁻¹ of IR spectrum after forming a resin composition comprising soluble polyimide resin and a low boiling point solvent on a substrate and heat treating at a temperature of 300°C is taken as 100%.

And, the insulating material for an electronic device may comprise an amine-based catalyst having boiling point of 60 to 120□ as a residual catalyst, wherein the amine-base catalyst may be at least one selected from the group consisting of N,N-diethylmethylamine, N,N-dimethylisopropylamine, N-methylpyrrolidine, pyrrolidine, and triethylamine.

And, the amount of outgassing after curing the insulating material may be 4ppm or less based on total weight of the soluble polyimide resin, and residual catalyst content in the outgassing may be 0.5ppm or less.

And, the low boiling point solvent may include at least one selected from the group consisting of diethyleneglycol methylethylether, diethyleneglycol dimethylether, diethyleneglycol diethylether, dipropyleneglycol dimethylether, methyl 3-methoxy propionate, ethyl 3-ethoxy propionate, propyleneglycol propionate, dipropyleneglycol dimethylether, cyclohexanone and propyleneglycol monomethylether acetate (PGMEA).

And, the amount of outgassing after curing the insulating material may be 4ppm or less based on total weight of the soluble polyimide resin, and residual solvent content in the outgassing may be 0.1 ppm or less.

And, Y in the Chemical Formula 1 may be at least one selected from the group consisting of the following Chemical Formulas:

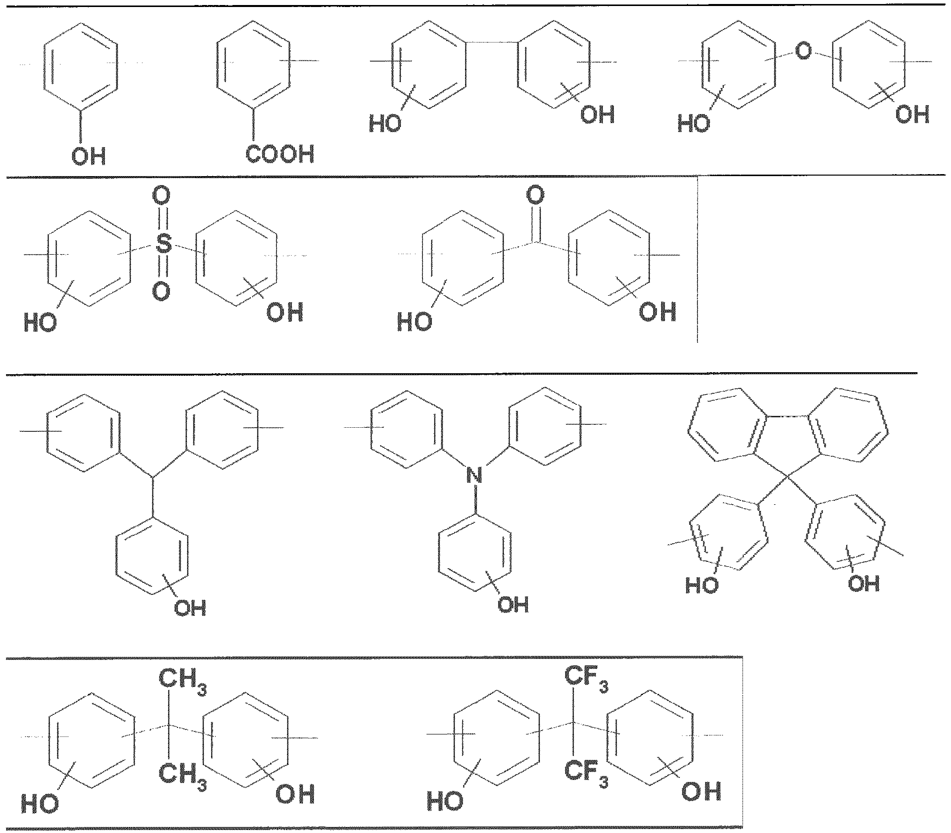

And, X in the Chemical Formula 1 may be at least one selected from the group consisting of the following Chemical Formulas:

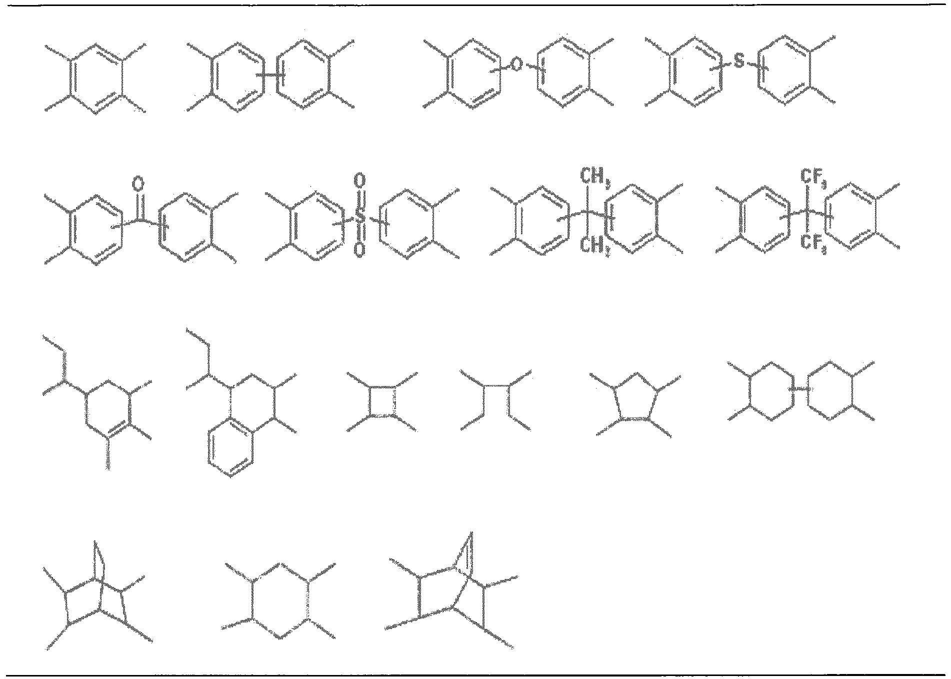

And, the soluble polyimide resin may have glass transition temperature of about 150 to 400°C, and weight average molecular weight of about 1,000 to 500,000.

And, although the insulating material for an electronic device may be formed on various substrates such as a glass substrate or a metal substrate, and the like, particularly, it may be appropriately formed on a plastic substrate that is vulnerable to heat, and it may be preferably applied for OLED, LCD or semiconductor devices, particularly for insulating material of OLED devices that are vulnerable to heat.

### Advantageous Effects

The insulating material for an electronic device may exhibit high imidization degree and excellent properties, even if a heat treatment process is progressed at low temperature of less than 300°C, for example, 250°C or less, on a substrate, without need to progress a high temperature curing process that was previously required for removal of a solvent or catalyst or conversion into polyimide resin. And, low boiling point solvent and catalyst may be effectively removed by a low temperature heat treatment process to minimize residual solvent content and residual catalyst content.

Thus, by using the insulating material of the present invention, the high temperature curing process, and the like may not be required, thus inhibiting damage or change in the properties of an electronic device, and particularly, the insulating material may be very preferably applied as insulating material for an OLED device, and the like, which is vulnerable to heat.

### Detailed Description of the Embodiments

Hereinafter, insulating material for an electronic device and the manufacturing method according to the embodiments of the invention will be explained in detail. However, there embodiments are presented to illustrate the invention, the scope of the invention is not limited thereto, and it is obvious to one of ordinary knowledge in the art that various modifications to the embodiments may be made within the scope of the invention.

As used herein, the term "insulating material for an electronic device" comprehensively refers to any insulating material used in various electronic devices such as OLED, LCD or semiconductor device, and the like. Specific examples of the insulating material may include an insulating layer, an insulating film, a photosensitive film, a photosensitive layer, a substrate or a partition wall, and the like used in various electronic devices, but not limited thereto, and may include any material that does not exhibit conductivity in the materials included in electronic devices. And, the "insulating material for an electronic device" may be of various shapes without being limited to specific shapes such as a thin film or a film, and the like.

According to one embodiment of the invention, there is provided insulating material for an electronic device comprising soluble polyimide resin comprising a repeat unit of the following Chemical Formula 1, which exhibits imidization degree of 70% or more after curing at a temperature of 250°C or less, and comprises a low boiling point solvent having boiling point of 130 to 180°C as a residual solvent:

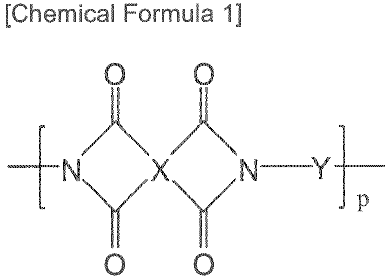

In the Chemical Formula 1, p is an integer of from 2 to 500, X is a tetravalent organic group, and Y is a divalent organic group having at least one hydroxy group or carboxy group.

The above-explained insulating material for an electronic device basically includes soluble polyimide resin having a repeat unit of the Chemical Formula 1. The soluble polyimide resin includes a functional group Y having a hydroxyl group or a carboxy group in the repeat unit, and it may exhibit excellent solubility in more various organic solvents, for example, low boiling point solvents such as PGMEA (boiling point: about 145°C), and the like.

And, as explained in more detail below, the soluble polyimide resin may be obtained by polymerizing a diamine compound having a hydroxyl group or a carboxy group, and dianhydride, in the presence of a specific low boiling point amine-based catalyst, and particularly, it may be provided with high imidization degree even under low polymerization temperature and/or curing temperature by using a specific amine-based catalyst. Thus, the insulating material for an electronic device according to one embodiment may be provided with high imidization degree of about 70% or more, or about 80% or more, or about 90% or more, or about 90 to 99%, even if heat treatment or curing is progressed at low temperature of less than about 300°C, for example, about 250°C or less, after forming a resin composition comprising the soluble polyimide resin and a low boiling point solvent on a substrate.

Furthermore, the soluble polyimide resin, due to excellent solubility and cure property, may be polymerized while dissolved in a low boiling point solvent in the presence of a low boiling point amine-based catalyst, and coated on a substrate to form insulating material. For this reason, in the process of forming insulating material, a heat treatment or curing process for removal of residual solvent and/or catalyst may be progressed at low temperature less than about 300°C, for example, about 250°C or less.

As the result, even if the insulating material according to one embodiment is formed by progressing a heat treatment or curing process at low temperature less than about 300°C, for example, about 250°C or less, it may exhibit high imidization degree of about 70% or more, and low boiling point solvent and catalyst may be effectively removed by the low temperature heat treatment process, and the like. Thus, the residual contents of the low boiling point solvent and catalyst that can be included in the insulating material as a residual solvent and a residual catalyst may be minimized, and the insulating material may exhibit more excellent properties. For this reason, if the insulating material according to one embodiment is applied, a high temperature heat treatment or curing process, for example a heat treatment or curing process at 300°C or more, may be substantially omitted in the process forming the insulating material, and yet, the insulating material may exhibit excellent general properties. Therefore, since a high temperature process may be omitted in the process of forming the insulating material for an electronic material according to one embodiment, damage to the electronic device or change in the properties of the electronic device due to the high temperature process may be inhibited, and insulating material having excellent properties may be provided. For example, if the high temperature process is progressed, properties of an electronic device may be changed, for example, electrical property of TFT may be changed, and seriously, an electronic device may be damaged. However, if the insulating material for an electronic device according to one embodiment is applied, the high temperature process may be omitted thus substantially preventing property change or damage of the device.

Due to these properties, the insulating material for an electronic device according to one embodiment may be preferably applied for an electronic device that includes organic substance and thus is vulnerable to heat, such as an OLED device, and the like, and it may be preferably applied on a plastic substrate that is vulnerable to heat, as well as on a glass substrate or a metal substrate, to exhibit excellent properties. Therefore, the insulating material according to one embodiment may overcome technical limitations of the conventional polyimide-based insulating material, and it may be very preferably applied for insulating material of more various electronic devices.

Hereinafter, insulating material for an electronic device, the properties and preparation method thereof according to embodiments of the invention will be explained in detail.

The imidization degree may be measured after forming a composition comprising soluble polyimide resin and a low boiling point solvent on a substrate, prebaking at about 110 to 130°C, and hardbaking at about 220 to 250°C. According to one embodiment, the imidization degree and outgassing amount may be measured after progressing the prebake and hardbake respectively at about 120°C for about 1 to 5 minutes, for example, about 4 minutes, and at about 230°C for about 0.5 to 2 hours, for example, about 1 hour. Even if low temperature heat treatment or curing is progressed after forming a resin composition comprising soluble polyimide resin and a low boiling point solvent on a substrate, the insulating material may have high imidization degree of about 70% or more, or about 80% or more, or about 90% or more, or about 90 to 99%, and the low boiling point solvent may be effectively removed to minimize residual solvent content. Thus, the insulating material may be dispensed with a high temperature heat treatment (or curing) process in the formation process, and yet may exhibit excellent properties due to high imidization degree.

And, the imidization degree may be analyzed by IR spectrum, For example, the imidization degree may be measured and analyzed based on the integrated intensity of CN band appearing at about 1350 to 1400 cm⁻¹ or about 1550 to 1650 cm⁻¹ of IR spectrum, after forming a resin composition comprising soluble polyimide resin and a low boiling point solvent on a substrate and heat treating at about 300°C. Specifically, as well known in the art, imidization may be completely progressed through the high temperature heat treatment of about 300°C, and thus, the ratio of the integrated intensity of CN band at this time is taken as 100% standard, and relative integrated intensity ratio of CN band after progressing a curing process at low temperature of about 250°C or less (for example, prebaking and hardbaking respectively at about 110 to 130°C and about 220 to 250°C) to the standard integrated intensity is measured, which is decided as imidization degree of one embodiment.

Referring to the following Examples and Comparative Examples, it is confirmed that if a polyimide precursor solution having the previously known composition is formed on a substrate, and a curing process is progressed under the above-explained low temperature, imidization degree may not reach about 60%. To the contrary, according to the insulating material of one embodiment, if a composition comprising soluble polyimide resin and a low boiling point solvent is formed on a substrate and a curing process is progressed under the above-explained low temperature, imidization degree may reach about 90%, and thus, a high temperature curing process of about 300°C or more may be dispensed with, and even if only a low temperature heat treatment or curing process is progressed, high imidization degree and excellent properties may be achieved.

Meanwhile, the insulating material for an electronic device according to one embodiment may include an amine-based catalyst having boiling point of about 60 to 120°C, or about 70 to 100°C, or about 80 to 90°C as a residual catalyst, and specific examples of the amine-based catalyst may include at least one selected from the group consisting of N,N-diethylmethylamine, N,N-dimethylisopropylamine, N-methylpyrrolidine, pyrrolidine, and triethylamine. Particularly, considering low boiling point and the resulting effective residual catalyst removal, and catalyst activity for achieving high imidization degree, triethylamine, and the like having boiling point of about 89°C may be used as the amine-based catalyst.

And, the insulating material according to one embodiment may have outgassing of about 4ppm or less, for example, about 0 to 3 ppm, or about 0.1 to 2.5 ppm, based on total weight of the soluble polyimide resin, after heat treatment or curing at low temperature of about 250°C or less, and it may have outgassing derived from the residual catalyst of about 0.5ppm or less, for example, about 0 to 0.5ppm, or about 0.05 to 0.3ppm.

The soluble polyimide resin included in the insulating material may be polymerized so as to have high imidization degree, in the presence of a specific amine-based catalyst, namely the above-explained amine-based catalyst having low boiling point. Thus, the insulating material according to one embodiment, obtained by coating a solution comprising the soluble polyimide resin and a low boiling point solvent, and the like, and progressing a heat treatment or curing process may include the specific amine-based catalyst as a residual catalyst. Since the residual catalyst of a specific amine-based catalyst has low boiling point, it may be completely or substantially completely removed in the process of progressing heat treatment or curing at low temperature of about 250°C or less. Thus, the insulating material according to one embodiment may include very small amount of a residual catalyst, substantially less than detection limit, and it may have largely reduced outgassing amount including the residual catalyst content. Thus, the insulating material according to one embodiment may exhibit more excellent properties even if a high temperature heat treatment or curing process is omitted, and may further reduce property deterioration of a device due to the outgassing.

And, as explained above, the insulating material for an electronic device according to one embodiment may include a low boiling point solvent having boiling point of about 130 to 180°C, or about140 to 160°C as a residual solvent, wherein the low boiling point solvent may include at least one selected from the group consisting of diethyleneglycol methylethylether, diethyleneglycol dimethylether, diethyleneglycol diethylether, dipropyleneglycol dimethylether, methyl 3-methoxy propionate, ethyl 3-ethyxoy propionate, propyleneglycol methylether propionate, dipropyleneglycol dimethylether, cyclohexanone and propyleneglycol monomethylether acetate(PGMEA). Among them, considering low boiling point and the resulting effective removal of the residual solvent, and high conversion rate into soluble polyimide resin, propyleneglycol monomethylether acetate(PGMEA) having boiling point of about 145°C may be used as the low boiling point solvent.

And, the insulating material according to one embodiment may have the amount of outgassing of about 4ppm or less, for example, about 0 to 3ppm, or about 0.1 to 2.5ppm, based on total weight of the soluble polyimide resin, after heat treating or curing at low temperature of about 250°C or less (for example, prebaking at about 110 to 130°C, and hardbaking at about 220 to 250°C). And, in the outgassing, the residual solvent content may be about 0.1 ppm or less, for example, 0 to 0.05ppm, or about 0.01 to 0.03pmm. According to a specific embodiment, the residual solvent content may be less than detection limit.

The soluble polyimide resin included in the insulating material may exhibit excellent solubility in a polar solvent having low boiling point, unlike common polyimide resin. Thus, the insulating material according to one embodiment may be obtained by polymerizing soluble polyimide resin in the low boiling point solvent, coating the resin composition including the polymerized solution on a substrate, and progressing a heat treatment or curing process. Thus, the insulating material according to one embodiment may include the low boiling point solvent as a residual solvent. Since the residual solvent has low boiling point, it may be completely or substantially completely removed in the process of progressing a heat treatment or curing process at low temperature of about 250°C or less. Therefore, the insulating material according to one embodiment may include very small amount of the residual solvent, substantially less than detection limit, and it may have much reduced total outgassing amount. Thus, the insulating material according to one embodiment may exhibit more excellent properties even if a high temperature heat treatment or curing process is omitted, and it may further reduce property deterioration of a device due to the outgassing and residual solvent.

Meanwhile, the soluble polyimide resin includes a repeat unit of the Chemical Formula 1 as a main repeat unit, and the repeat unit may include a divalent functional group Y having a hydroxyl group or a carboxy group. Due to the existence of the functional group, the soluble polyimide resin may exhibit excellent solubility in a low boiling point polar solvent, and it may exhibit excellent imidization degree even when low temperature polymerization and curing occur, in the presence of a specific amine-based catalyst. Specific examples of the Y may include a divalent functional group having a phenolic hydroxyl group or a carboxy group, for example, a divalent aromatic functional group selected from the group consisting of the following Chemical Formulas:

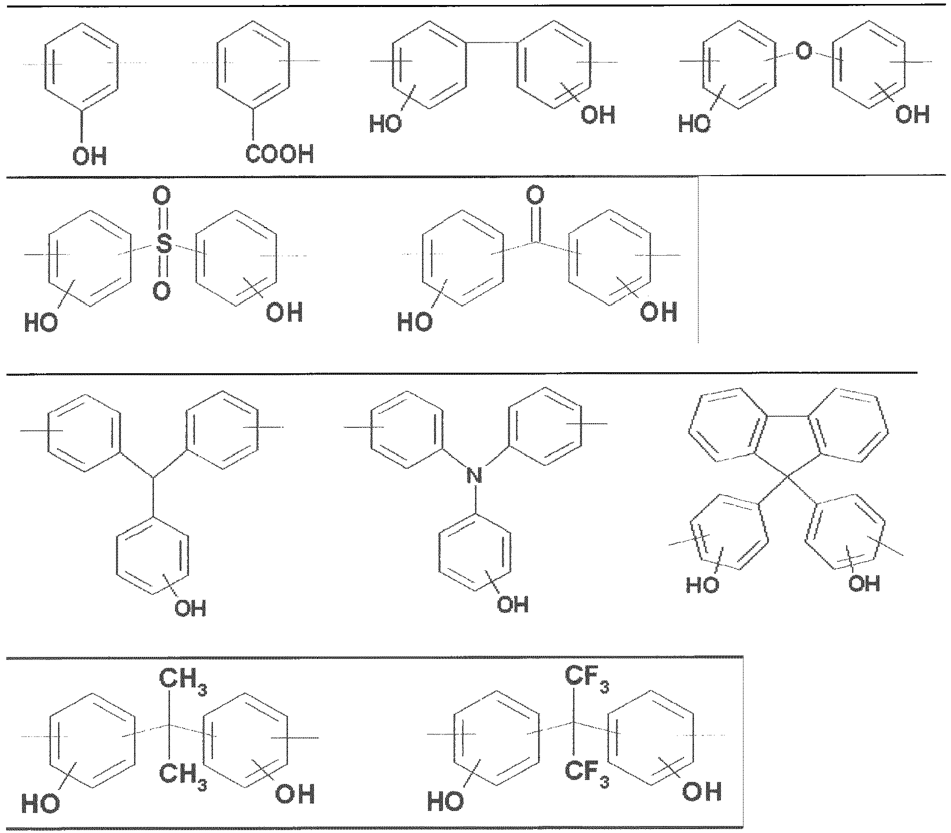

And, the repeat unit of the Chemical Formula 1 of the soluble polyimide resin may include a tetravalent functional group X derived from dianhydride, and specific examples of the X may include a tetravalent aromatic or aliphatic functional group selected from the group consisting of the following Chemical

Formulas:

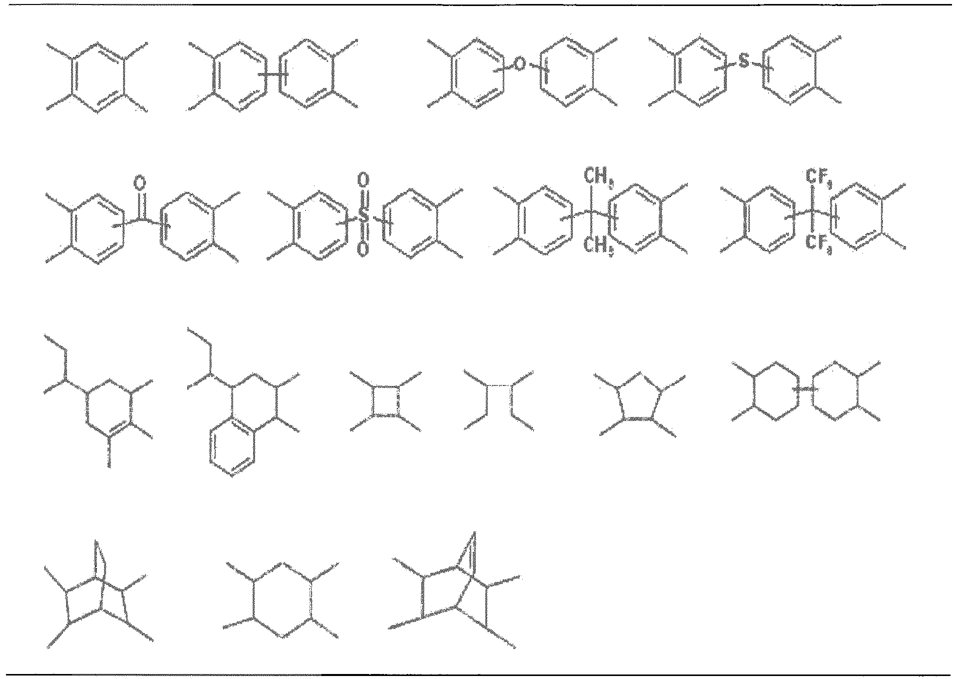

And, the soluble polyimide resin may be a homopolymer or a copolymer including one or more kinds of the repeat unit of the Chemical Formula 1 only, but it may be a copolymer further including a repeat unit of a different kind from the Chemical Formula 1. For example, the soluble polyimide resin may further include a polyimide-based repeat unit of the General Formula 1. However, considering solubility of the soluble polyimide resin in a low boiling point solvent or cure property, it may include the repeat unit of the Chemical Formula 1 in the content of about 50mol% or more, or about 60mol% or more, or about 70mol% or more, or about 80mol% or more, or about 90mol% or more:

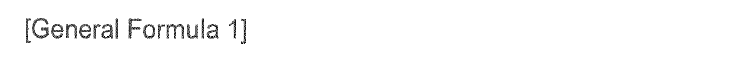

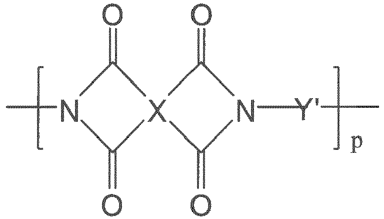

In the General Formula 1, X and p are as defined in the Chemical Formula 1, and Y' represents a divalent aliphatic or aromatic organic group that does not have a hydroxyl group or a carboxy group.

In the General Formula 1, specific examples of the Y' are well known in the art, and for example, may be selected from the group consisting of the following Chemical Formulas:

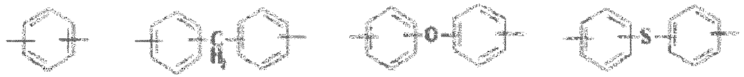

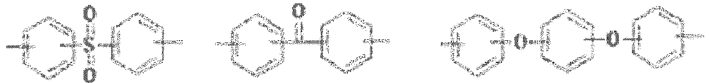

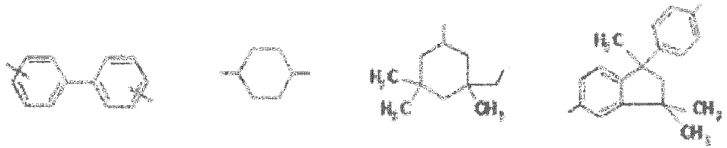

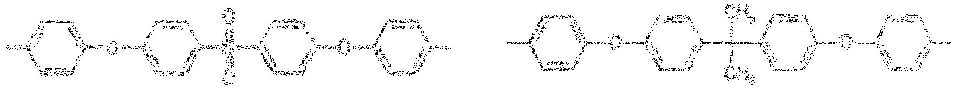

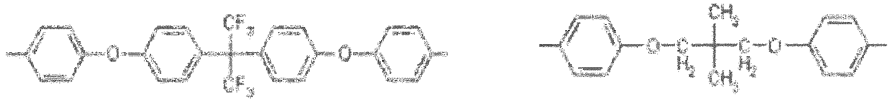

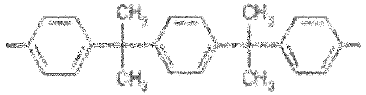

The soluble polyimide resin may have glass transition temperature of about 150 to 400°C, weight average molecular weight of about 1,000 to 500,000, or about 5,000 to 100,000.

And, the insulating material for an electronic device may be formed by coating a resin composition including the soluble polyimide resin, for example, a photosensitive resin composition or an ink composition for printing including the soluble polyimide resin on a substrate, and progressing a heat treatment or curing process. The insulating material may further include additional additives or cross linking agent, and the like, commonly used in the photosensitive resin composition or ink composition for printing. For example, the insulating material may further include a residual photoacid generator, a photoactive compound and/or a cross linking agent, and it may include a cross-linked structure derived from the crosslinking agent and soluble polyimide resin. In addition, it may further include various additives derived from common ingredients of the photosensitive composition or ink composition for printing.

The insulating material for an electronic device may exhibit high imidization degree, low residual catalyst content, low residual solvent content, and low outgassing amount, and the like, even if it is formed substantially without high temperature heat treatment or curing at about 300°C or more. Thus, the insulating material may be applied as insulating material of various electronic devices such as OLED, LCD or a semiconductor device, and the like, and particularly, it may be preferably applied for an electronic device including organic substance and thus vulnerable to heat, such as an OLEF device and the like, and exhibit excellent properties. And, the insulating material may be preferably formed on a plastic substrate that is relatively vulnerable to heat, as well as on a glass substrate or a metal substrate, and it may be appropriately applied for various insulating materials included in an electronic device, such as an insulating layer, an insulating film, a photosensitive film, a photosensitive layer, a substrate or a partition wall, and the like.

Meanwhile, the insulating material for en electronic device may be prepared by polymerizing diamine including a hydroxyl group or a carboxy group, and dianhydride, in a low boiling point solvent, in the presence of a low boiling point amine-based catalyst, to obtain the above-explained soluble polyimide resin, and coating a solution of the soluble polyimide resin dissolved in the low boiling point solvent on a substrate, and then, heat treating (or curing) at low temperature of about 250°C or less.

Namely, according to the preparation process, insulating material is formed by progressing polymerization using a specific low boiling amine-based catalyst to obtain soluble polyimide resin with high imidization degree, coating the solution thereof on a substrate, and progressing a low temperature heat treatment (or curing) process. In the process of forming the insulating material, since the amine-base catalyst and solvent have lower boiling point than heat treatment (or curing) temperature, they may be completely or substantially completely removed in the low temperature heat treatment (or curing) process. And, the soluble polyimide resin may exhibit high imidization degree of about 70% or more, immediately from polymerization to the formation of insulating material, by using a specific amine-based catalyst. As the result, a high temperature heat treatment or curing process at about 300°C or more may be dispensed with, and even if a low temperature heat treatment or curing process is progressed at about 250°C or less after coating the solution of the soluble polyimide resin on a substrate, insulating material for an electronic device with high imidization degree, low residual solvent content, and low residual catalyst content, and the like, and the resulting excellent properties may be achieved.

Hereinafter, the preparation process may be explained in detail according to each step.

First, the soluble polyimide resin is prepared by polymerizing diamine including a hydroxyl group or a carboxy group, and dianhydride, in a low boiling point solvent, in the presence of a specific low boiling amine-based catalyst.

As the low boiling point organic solvent, a polar organic solvent having boiling point of about 130 to 180°C, or about 140 to 160°C may be used, and specific examples thereof may include diethyleneglycol methylethylether, diethyleneglycol dimethylether, diethyleneglycol diethylether, dipropyleneglycol dimethylether, methyl 3-methoxy propionate, ethyl 3-ethyoxy propionate, propyleneglycol methylether propionate, dipropyleneglycol dimethylether, cyclohexanone or propyleneglycol monomethylether acetate (PGMEA), and the like. In addition, various polar organic solvents having the above boiling point range may be used, and mixed solvents of 2 or more kinds thereof may be used. If the boiling point of the organic solvent is less than about 130°C, sufficient energy may not be achieved for forming polyimide, thus lowering conversion rate, and if the boiling point of the solvent is greater than about 180°C, the residual solvent may not be properly removed in the heat treatment (or curing) process for forming insulating material.

And, the low boiling point solvent may be used in the amount of about 20 to 2000 parts by weight, or about 100 to 1000 parts by weight, or about 200 to 400 parts by weight, based on 100 parts by weight of total monomers including diamine and dianhydride. If the content of the solvent is too low, monomers or soluble polyimide resin may not sufficiently dissolved, and if the content of the solvent is too high, a coating with a sufficient thickness may not be formed when coating a solution of the soluble polyimide resin on a substrate after polymerization.

And, as the low boiling point amine-based catalyst, an amine-based catalyst having boiling point of about 60 to 120°C, or about 70 to 100°C, or about 80 to 90°C may be used. If the boiling point of the catalyst is too low, significant amount thereof may be evaporated during polymerization, and if the boiling point of the catalyst is too high, residual catalyst may not be properly removed in the process of heat treatment (or curing) for forming insulating material, and side reaction may be caused.

As the low boiling point amine-based catalyst, catalysts that may be effectively imidated at low temperature, and simultaneously easily removed after reaction may be used, and specific examples thereof may include N, N-diethylmethylamine, N,N-dimethylisopropylamine, N-methylpyrrolidine, pyrrolidine and triethylamine.

The catalyst may be used in the content of about 0.5 to 30 parts by weight, or about 2 to 20 parts by weight, or about 5 to 10 parts by weight, based on 100 parts by weight of total monomers including diamine and dinhydride. If the content of the catalyst is too low, conversion rate into polyimide resin may be decreased, and if the content of the catalyst is too high, the residual catalyst may not properly removed, and side reaction may be caused.

Meanwhile, as the diamine and dianhydride monomers for obtaining the soluble polyimide resin, diamine having a hydroxyl group or a carboxy group, and common dianhydride may be respectively used.

Specific examples of the dianhydride may include at least one acid anhydride selected from the group consisting of pyromellitic anhydride, 3,3',4,4'-biphenyltetracarboxylic acid dianhydride, butane-1,2,3,4-tetracarboxylic acid dianhydride, 3,3',4,4'-benzophenonetetracarboxylic acid dianhydride, 3,3',4,4'-diphenylethertetracarboxylic acid dianhydride, 3,3',4,4'-diphenylsulfonetetracarboxylic acid dianhydride, 2,2-bis(3,4-dicarboxyphenyl)hexafluoroisopropylidene dianhydride, 3,3',4,4'-biphenyltetracarboxylic acid dianhydride, 3,3',4,4'-benzophenonetetracarboxylic acid dianhydride, 4,4'- hexafluoroisopropylidene diphthalic anhydride, 3,3',4,4'-diphenylsulfonetetracarboxylic acid dianhydride, 1,2,3,4-cyclobutane tetracarboxylic acid dianhydride, 1,2-dimethyl-1,2,3,4-cyclobutane tetracarboxylic acid dianhydride, 1,2,3,4-tetramethyl-1,2,3,4-cyclobutane tetracarboxylic acid dianhydride, 1,2,3,4-cyclopentane tetracarboxylic acid dianhydride, 1,2,4,5-cyclohexane tetracarboxylic acid dianhydride, 3,4-dicarboxy-1,2,3,4-tetrahydro-1-naphthalene succinic dianhydride, 5-(2,5-dioxotetrahydrofuryl)-3-methyl-3-cyclohexene-1,2-dicarboxylic acid dianhydride, 2,3,5-tricarboxy-2-cyclopentane acetic acid dianhydride, bicyclo[2.2.2]oct-7-en-2,3,5,6-tetracarboxylic acid dianhydride, 2,3,4,5-tetrahydrofurane tetracarboxylic acid dianhydride, and 3,5,6-tricarboxy-2-norbornane acetic dianhydride, or derivatives thereof.

And, specific examples of the diamine having a hydroxyl group or a carboxy group may include diamine having a divalent organic group including a phenolic hydroxyl group, a carboxyl group or a hydroxyl group, such as 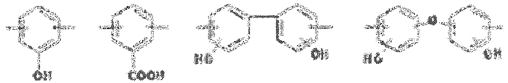 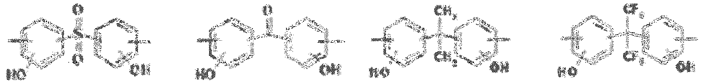 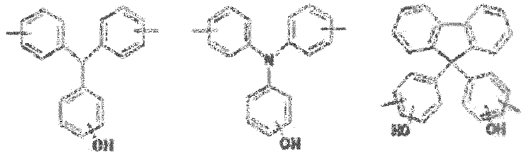 and a divalent organic group derived from 3,5-diaminobenzoic acid, and the like. By preparing the soluble polyimide resin through polymerization of such diamine and dianhydride, soluble polyimide resin having excellent solubility in a low boiling point solvent may be prepared, and particularly, by using a low boiling point amine-based catalyst in the polymerization, even if a low temperature heat treatment (or curing) process is progressed after forming a solution of soluble polyimide resin on a substrate, the insulating material according to one embodiment exhibiting high imidization degree may be formed.

In addition, in order to obtain soluble polyimide resin in the form of a copolymer further including additional repeat unit, for example, a repeat unit of the above-explained General Formula 1, additional diamine may be copolymerized with dianhydride, together with the diamine having a hydroxyl group or a carboxy group. Wherein, the diamine that can be used is not specifically limited, and any diamine known to be usable for formation of polyimide resin may be used.

Specific examples of the diamine may include at least one aromatic diamine selected from the group consisting of phenylenediamine, m-phenylenediamine, 2,4,6-trimethyl-1,3-phenylenediamine, 2,3,5,6-tetramethyl-1,4-phenylenediamine, 4,4'-diamondiphenylether, 3,4'-diamondiphenylether, 3,3'-diamondiphenylether, 4,4'-diaminodiphenylsulfide, 4,4'-diaminodiphenylmethane, 3,4'-diaminodiphenylmethane, 3,3'-diaminodiphenylmethane, 4,4'-methylene-bis(2-methylaniline), 4,4'-methylene-bis(2,6-dimethylaniline), 4,4'-methylene-bis(2,6-diethylaniline), 4,4'-methylene-bis(2-isopropyl-6-methylaniline), 4,4'-methylene-bis(2,6-diisopropylaniline), 4,4'-diaminodiphenylsulfone, 3,3'-diaminodiphenylsulfone, benzidine, o-tolidine, m-tolidine, 3,3',5,5'-tetramethylbenzidine, 2,2'-bis(trifluoromethyl)benzidine, 1,4-bis(4-aminophenoxy)benzene, 1,3-bis(4-aminophenoxy)benzene, 1,3-bis(3-aminophenoxy)benzene, bis[4-(4-aminophenoxy)phenyl]sulfone, bis[4-(3-aminophenoxy)phenyl]sulfone, 2,2-bis[4-(4-aminophenoxy)phenyl]propane, and 2,2-bis[4-(3-aminophenoxy)phenyl]propane; and at least one aliphatic diamine selected from the group consisting of 1,6-hexanediamine, 1,4-cyclohexanediamine, 1,3-cyclohexanediamine, 1,4-bis(aminomethyl)cyclohexane, 1,3-bis(aminomethyl)cyclohexane, 4,4'-diaminodicyclohexylmethane, and 4,4'-diamino-3,3'-dimethyldicyclohexylmethane 4,4'-diamino-3,3'-dimethyldicyclohexylmethane, 1,2-bis-(2-aminoethoxy)ethane, bis(3-aminopropyl)ether, 1,4-bis(3-aminopropyl)piperazine, 3,9-bis(3-aminopropyl)-2,4,8,10-tetraoxaspiro[5.5]-undecane, 1,3-bis(3-aminopropyl)tetramethyldisiloxane.

Meanwhile, polymerization of the monomers including diamine and dianhydride may be conducted at low temperature of about 120 to 200°C, or about 130 to 180°C, or about 140 to 160°C. If soluble polyimide resin is prepared under the above condition, conversion rate into polyimide resin may be about 90% or more, for example, about 90 to 100%, and residual catalyst content in the polymerized polyimide resin may be about 0.001~0.1 wt% in the total polyimide resin.

Since soluble polyimide resin prepared by the above method has high imidization degree, further increase in imidization degree may not be significantly required, and it may be cured at low temperature of about 250°C or less, or about 250°C or less, or about 150 to 250°C, or about 230°C less, or about 200°C or less, to form insulating material having high imidization degree. And, the soluble polyimide resin may exhibit excellent solubility in a low boiling point solvent.

Therefore, process difficulty in that curing or heat treatment should be progressed at high temperature of about 300°C or more, disadvantage of being unusable in a heat-vulnerable process, or problems in that the finally formed insulating material has low imidization degree and deteriorated properties, even if high temperature curing is progressed, may be overcome. And, in the process of progressing low temperature curing, the low boiling point solvent or low boiling point catalyst may be completely or substantially completely removed, and thus, even if only a low temperature heat treatment or curing process is progressed, insulating material having excellent properties may be provided.

Meanwhile, after obtaining soluble polyimide resin through the above explained polymerization, insulating material for an electronic device may be formed by coating a solution of the resin dissolved in a low boiling point solvent, for example, a photosensitive composition or an ink composition for printing in the solution state, on a substrate, and progressing heat treatment or curing. Wherein, the photosensitive composition or ink composition for printing may further include additional additives, a crosslinking agent, a photoactive compound, or a photoacid generator, and the like, and the kinds of these ingredients are well known in the art.

And, the heat treatment or curing may be progressed at a temperature of about 250°C or less, or about 150 to 250°C, or about 230°C or less, or about 200°C or less, and even if the low temperature heat treatment or curing is progressed, insulating material having high imidization degree, and the like may be prepared. And, a low boiling point solvent, and the like may be effectively removed by the low temperature heat treatment, and the like, to minimize residual solvent content. According to one embodiment, the heat treatment or curing process may be progressed in two steps of prebake and hardbake processes, and the prebake and hardbake processes may be progressed respectively at about 110 to 130°C and about 220 to 250°C.

### EXAMPLES

Hereinafter, examples are presented for complete understanding of the invention, but the following examples are only to illustrate the invention, and the scope of the invention is not limited thereto.

### Example 1: Low temperature polyimide polymerization

Into a 100ml round-bottom flask, 12.1g of 2,2-bis(3-amino-4-hydroxyphenyl)hexafluoropropane and 60g of propyleneglycol monomethylether acetate(PGMEA; boiling point: about 145°C) were sequentially introduced and slowly agitated to completely dissolve, and then, 10.2g of 3,3',4,4'-diphenylether tetracarboxylic acid dianhydride was slowly added while maintaining the flask at room temperature in water bath. To the mixed solution, 11g of toluene and 4g of triethylamine (boiling point: about 89°C) were introduced, and a dean-stark distillation apparatus was installed so as to remove water therethrough, and then, the solution was refluxed at 150°C for 5 hours. After removing water in the dean-stark distillation apparatus, the solution was further refluxed for 2 hours and cooled to room temperature, to obtain a soluble polyimide resin solution.

Polyimide production peak was confirmed by IR, and it was confirmed by GPC that the polyimide resin has weigh average molecular weight of 40,000, and poly disperse index (PDI) of 1.5.

### Example 2: Low temperature polyimide polymerization

Into a 100ml round-bottom flask, 12.1g of 2,2-bis(3-amino-4-hydroxyphenyl)hexafluoropropane and 60g of propyleneglycol monomethylether acetate(PGMEA; boiling point: about 145°C) were sequentially introduced and slowly agitated to completely dissolve, and then, 6.5g of butane-1,2,3,4-tetracarboxylic acid dianhydrie was slowly added while maintaining the flask at room temperature in water bath. To the mixed solution, 11 g of toluene and 4g of triethylamine (boiling point: about 89°C) were introduced, and a dean-stark distillation apparatus was installed so as to remove water therethrough, and then, the solution was refluxed at 150°C for 5 hours. After removing water in the dean-stark distillation apparatus, in order to remove a catalyst, the solution was further refluxed for 2 hours and cooled to room temperature, to obtain a soluble polyimide resin solution.

Polyimide production peak was confirmed by IR, and it was confirmed by GPC that the polyimide resin has weigh average molecular weight of 35,000, and poly disperse index (PDI) of 1.7.

### Comparative Example 1: Polymerization of polyamic acid ester(polyimide precursor)

Into a 100ml round-bottom flask, 12.1g of 2,2-bis(3-amino-4-hydroxyphenyl)hexafluoropropane and 30g of gammabutyrolactone (boiling point: about 204°C) were sequentially introduced, and slowly agitated to completely dissolve. While maintaining the jacket temperature of the reactor at 10°C, 13.6g of 4,4'-oxybis[2-(chlorocarbonyl)]methylbenzoate dissolved in 30g of gammabutyrolactone was slowly added and agitated. The mixed solution was sufficiently reacted for 2 hours, and then, further agitated at room temperature for 20 hours to prepare polyamic acid ester. Water was poured into the reaction product to precipitate, and then, the filtered solid product was dried at 50°C under vacuum condition. The dried solid product was dissolved in 50g of gammabutyrolactone to prepare a polyamic acid ester solution.

Polyamic acid ester production peak was confirmed by IR, and it was confirmed by GPC that the polyamic acid ester has weight average molecular weight of 44,000, and poly disperse index (PDI) of 1.7.

### Comparative Example 2: Polymerization of polybenzoxazole precursor (polyimide precursor)

Into a 100ml round-bottom flask, 12.1g of 2,2-bis(3-amino-4-hydroxyphenyl)hexafluoropropane and 30g of N-methyl-2-pyrrolidone (boiling point: about 202°C) were sequentially introduced, and slowly agitated to completely dissolve. While maintaining the jacket temperature of the reactor at 5°C, 6.7g of terephthaloyl chloride dissolved in 30g of N-methyl-2-pyrrolidone was slowly added and agitated. The mixed solution was agitated for 1 hour to sufficiently react, and then, a catalytic amount of pyridine was introduced, and the mixture was further agitated at room temperature for 4 hours to prepare polybenzoxazole precursor.

The production peak of polybenzoxazole precursor was confirmed by IR, and it was confirmed by GPC that the polybenzoxazole precursor has weight average molecular weight of 35,000, and poly disperse index (PDI) of 1.6.

### Experimental Example 1: Evaluation of imidization degree

- Each polymer solution prepared in Examples and Comparative Examples was spin coated on a silicone wafer, and prebaked at 120°C for 4 minutes and hardbaked at 230°C for 1 hour. And then, each imidization degree was measured using FT-IR.
- For measurement of imidization degree, the integrated value of CN band of each sample cured at 300°C for 1 hour (appearing at about 1350 to 1400 cm⁻¹ of IR spectrum (Examples 1, 2 and Comparative Example 1) or at about 1550 to 1650 cm⁻¹ (Comparative Example 2)) was taken as 100% standard, and the ratio of the integrated value of CN band of the sample cured by the prebaking and hardbaking to the standard was measured to confirm imidization degree of each sample.

**[Table 1]**

| | After Prebake(120°C, 4min) | After Hardbake (230°C 1hr) |
|---|---|---|
| Example 1 | 92% | 92% |
| Example 2 | 90% | 91% |
| Comparative Example1 | 0% | 55% |
| Comparative Example 2 | 0% | 61% |

Referring to the Table 1, it was confirmed that if soluble polyimide resin is prepared by reacting diamine having a hydroxyl group with dianhydride in the presence of an amine-based catalyst such as triethylamine as Examples 1 and 2, it may be prepared with high imidization degree of about 90% or more from the polymerization. Thus, it is confirmed that even if a solution of the soluble polyimide resin is coated on a substrate and heat treatment or curing is progressed at low temperature of about 250°C or less, insulating material for an electronic device having high imidization degree may be obtained

To the contrary, it is confirmed that if polyimide resin precursor is polymerized without using a catalyst such as triethylamine, and the like, the solution is coated on a substrate and low temperature heat treatment or curing is progressed to form insulating material as Comparative Examples 1 and 2, imidization degree is at most 61%, and thus, the properties of the insulating material are poor compared to Examples. It is also confirmed that in order to obtain insulating material having high imidization degree and excellent properties according to Comparative Examples 1 and 2, a separate curing process at high temperature of about 300°C or more is essentially required.

### Experimental Example 2: Analysis of outgassing amount

Each polymer solution prepared in Examples and Comparative Examples was spin coated on a silicone wafer, and prebaked at 120°C for 4 minutes to obtain a thin film with a thickness of 2µm. After curing the thin film at 230°C for 1 hour, it was purged at 250°C using a Purge&Trap-GC/MSD apparatus, outgassing was collected at -40°C for 1 hour, and the outgassing was quantitatively and qualitatively analyzed. The results are as described in the following Table 2.

**[Table 2]**

| | Total outgassing amount | Outgassing amount of residual catalyst | Outgassing amount of residual solvent |
|---|---|---|---|
| Example 1 | 2.3ppm | TEA 0.26ppm | PGMEA - less than detection limit |
| Example 2 | 2.4ppm | TEA 0.28ppm | PGMEA- less than detection limit |
| Comparative Example 1 | 5ppm | Catalyst not used, Not Applicable | GBL 0.24ppm |
| Comparative Example 2 | 4.8ppm | Pyridine 0.9ppm | NMP 0.43ppm |

Referring to the Table 2, it is confirmed that the insulating material formed in Examples 1 and 2, although formed by low temperature curing at about 250°C or less, has low total outgassing amount, and very low outgassing amount derived from the residual catalyst or residual solvent. This is because the residual catalyst and residual solvent are substantially completely removed in the low temperature curing process, by using the low boiling point solvent and catalyst in Examples 1 and 2.

To the contrary, in the insulating material of Comparative Examples 1 and 2, it is confirmed that significant amount of outgassing is generated because residual solvent and catalyst are not properly removed by low temperature curing, and a considerable portion thereof is derived from the residual catalyst or residual solvent. The outgassing derived from the residual catalyst and residual solvent may adversely influence on reliability of a device.

## Claims

1. Insulating material for an electronic device comprising soluble polyimide resin comprising a repeat unit of the following Chemical Formula 1, which exhibits imidization degree of 70% or more after curing at a temperature of 250°C or less, and comprises a low boiling point solvent having boiling point of 130 to 180°C as a residual solvent. 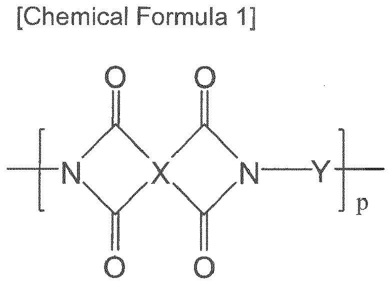 in the Chemical Formula 1, p is an integer of from 2 to 500, X is a tetravalent organic group, and Y is a divalent organic group having at least one hydroxy group or carboxy group.

2. The insulating material for an electronic device according to claim 1, wherein the imidization degree is measured after forming a resin composition comprising soluble polyimide resin and a low boiling point solvent on a substrate, prebaking at 110 to 130°C, and hardbaking at 220 to 250°C.

3. The insulating material for an electronic device according to claim 2, wherein the imidization degree is represented by relative integrated intensity ratio of CN band after hardbaking at 220 to 250°C, when the integrated intensity of CN band appearing at 1350 to 1400 cm⁻¹ or 1550 to 1650 cm⁻¹ of IR spectrum after forming a resin composition comprising soluble polyimide resin and a low boiling point solvent on a substrate and heat treating at a temperature of 300°C is taken as 100%.

4. The insulating material for an electronic device according to claim 1, wherein the low boiling point solvent includes at least one selected from the group consisting of diethyleneglycol methylethylether, diethyleneglycol dimethylether, diethyleneglycol diethylether, dipropyleneglycol dimethylether, methyl 3-methoxy propionate, ethyl 3-ethoxy propionate, propyleneglycol propionate, dipropyleneglycol dimethylether, cyclohexanone and propyleneglycol monomethylether acetate (PGMEA).

5. The insulating material for an electronic device according to claim 1, wherein the amount of outgassing after curing the insulating material is 4ppm or less based on total weight of the soluble polyimide resin, and residual solvent content in the outgassing is 0.1 ppm or less.

6. The insulating material for an electronic device according to claim 1, wherein the insulating material for an electronic device comprises an amine-based catalyst having boiling point of 60 to 120°C as a residual catalyst.

7. The insulating material for an electronic device according to claim 6, wherein the amine-based catalyst includes at least one selected from the group consisting of N,N-diethylmethylamine, N,N-dimethylisopropylamine, N-methylpyrrolidine, pyrrolidine, and triethylamine.

8. The insulating material for an electronic device according to claim 6, wherein the amount of outgassing after curing the insulating material is 4ppm or less based on total weight of the soluble polyimide resin, and residual catalyst content in the outgassing is 0.5ppm or less.

9. The insulating material for an electronic device according to claim 1, wherein Y in the Chemical Formula 1 is at least one selected from the group consisting of the following Chemical Formulas:

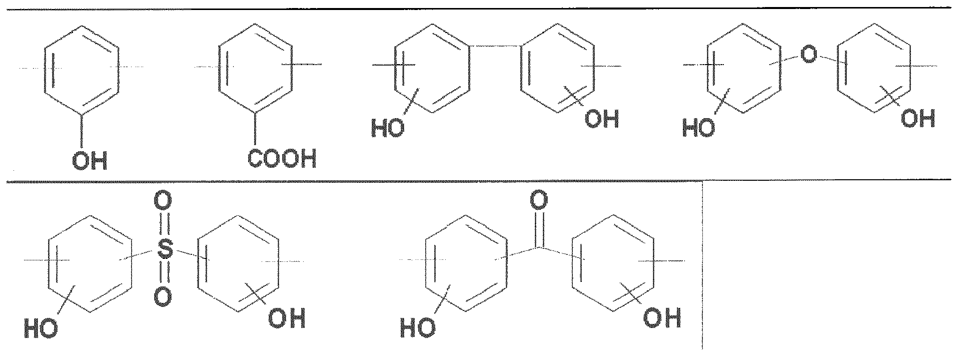

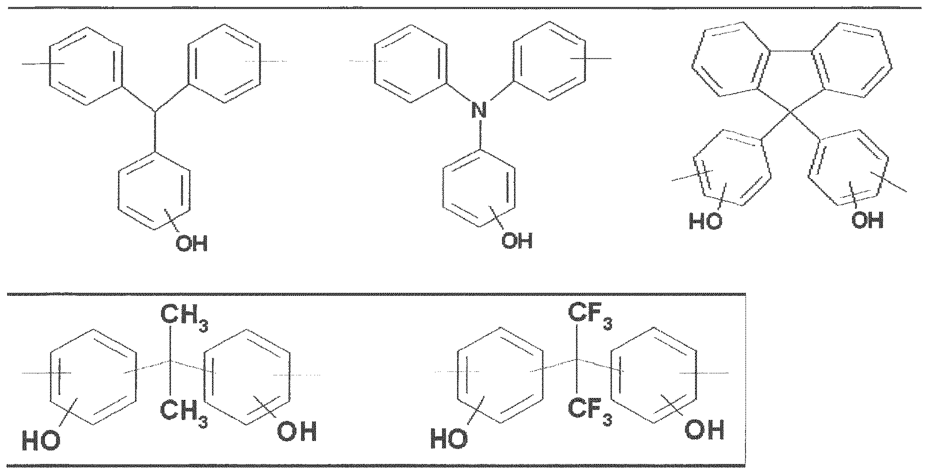

10. The insulating material for an electronic device according to claim 1, wherein X in the Chemical Formula 1 is at least one selected from the group consisting of the following Chemical Formulas:

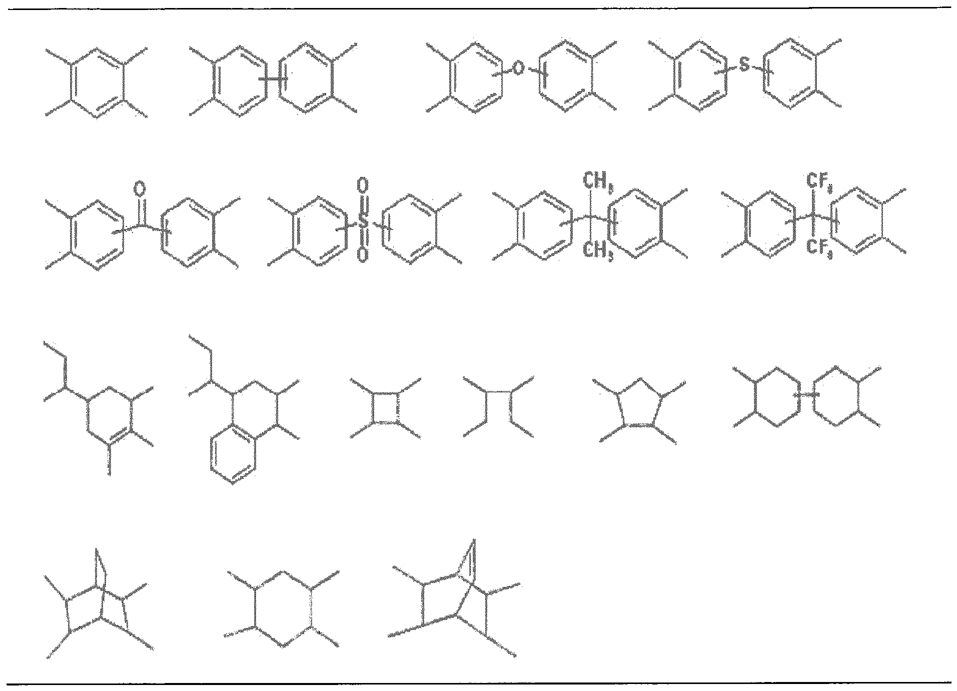

11. The insulating material for an electronic device according to claim 1, wherein the soluble polyimide resin has glass transition temperature of 150 to 400°C.

12. The insulating material for an electronic device according to claim 1, wherein the soluble polyimide resin has weight average molecular weight of 1,000 to 500,000.

13. The insulating material for an electronic device according to claim 1, wherein the insulating material for an electronic device is formed on a plastic substrate.

14. The insulating material for an electronic device according to claim 1, wherein the insulating material for an electronic device is used for OLED, LCD or semiconductor device.
